# EUROPEAN PATENT SPECIFICATION

(11) **EP 4 452 775 B1**
(45) Date of publication and mention of the grant of the patent: **21.10.2026**
(21) Application number: 22839501.8
(22) Date of filing: 22.12.2022
(51) Int. Cl.: B65D 71/00, B60P 7/08

(54) **WINDING ASSEMBLY WITH RETAINER**
WICKLUNGSANORDNUNG MIT HALTER
ENSEMBLE D'ENROULEMENT AYANT UN DISPOSITIF DE RETENUE

(30) Priority: 23.12.2021 GB 202118869; 30.05.2022 GB 202207960; 21.12.2022 GB 202219327
(43) Date of publication of application: 30.10.2024
(73) Proprietor: Loadhog Limited, Sheffield, South Yorkshire S9 2SU (GB)
(72) Inventor: MCCABE, Allan, Sheffield, South Yorkshire S9 2SU (GB); BAKER, Martin, Sheffield, South Yorkshire S9 2SU (GB)
(86) International application number: PCT/IB2022/062660
(87) International publication number: WO 2023/119212

(56) References cited:
- WO-A1-2021/090253
- DE-U1- 202014 007 491

## Description

### FIELD OF THE INVENTION

Embodiments of the present invention relate to a winding assembly with intuitive handle actuation. In particular, the winding assembly is a pallet lid winding assembly with intuitive handle actuation.

### BACKGROUND TO THE INVENTION

It is known to load goods on pallets. Lids can be mounted on the loads. Such lids are provided with straps to tighten the lid against the load when the ends of the straps as secured to the pallet. The lids include tightening mechanisms, operated by levers, to tighten the strap, thereby pulling the lid against the load. In some situations, using the tightening mechanisms by operating the levers can be time consuming. For example, the lever may need to be turned many times to ratchet the straps tight. Some users may turn the lever too many times and over-tighten the straps. In some situations, releasing a tightening mechanism may rely upon a dedicated pawl release control, which may not be intuitive and self-explanatory to all users.

WO 2021/090253 A1 discloses a ratchet spool (59) for use in a winding assembly (16). The ratchet spool (59) is rotatable about a principal axis (61). The ratchet spool (59) comprises a main part (20) and a plurality of ratchet teeth (60) arranged circumferentially around the main part (20). The ratchet teeth (60) are engageable by a ratchet arrangement (18) for driving the ratchet spool (59) in a driving direction about said principal axis (61). The ratchet spool (59) also has a drive formation (21) for driving the ratchet spool (59) in said driving direction.

DE 20 2014 007491 U1 discloses a belt tensioner, in particular a tarpaulin tensioner, with a lower part (1) having two side cheeks (4) connected to one another by means of several webs (5, 6, 7), with an upper part (20) which is supported on the lower part so as to be pivotable about a pivot axis and which has two side arms (21) which are connected via at least one deflection web (22) for a belt and a handling web (23), and with a releasable locking device between the upper part (20) and the lower part (1) for locking the lower part in the tensioning position, which has an unlocking element which can be moved against the restoring force of a spring, characterized in that a deflection roller (60) for the belt and a braking device (70) for the belt are arranged on the pivot axis, and/or that the unlocking element is at least partially phosphorescent or fluorescent and/or reflective.

### BRIEF DESCRIPTION OF VARIOUS EMBODIMENTS OF THE INVENTION

According to the invention there is provided a winding assembly comprising:
a tensioner to engage a tensioning line (e.g., strap, wire or the like);
a lever comprising a fulcrum body and an elongate handle extending from the fulcrum body;
a drive linkage coupling actuation of the lever to motion of the tensioner;
a return spring to bias the lever towards a rest position of the lever; and
a retainer configured to be engaged following actuation of the lever in a first, tensioning direction, to prevent movement of the lever in a second, opposite direction wherein the retainer comprises a catch to automatically engage and hold the lever.

An advantage of the retainer is that operation of the winding assembly is more intuitive. This is because engagement of the retainer provides clear feedback that the tensioning line has been tensioned to the predetermined target tension that the manufacturer has determined to be an appropriate amount of tension.

The winding assembly comprises the return spring. The return spring may be in a tensioner load path between the lever and the tensioner. The return spring may apply a bias force to bias the tensioner from a tensioning position of the tensioner towards a home position of the tensioner, however, the engagement of the retainer may keep the tensioner in its tensioning position. The bias force of the return spring may also reach the lever via the drive linkage. Therefore, the return spring may simultaneously bias the tensioner towards the home position and bias the lever towards a rest position of the lever.

An advantage of the return spring is intuitive operation, because if the user does not move the handle of the lever enough to reach the correct tension, the retainer will not engage. If the user releases the handle without the retainer being engaged, the handle will return back to its rest position. The lever is therefore stable in two binary positions - its rest position and its full stroke position at which the retainer is engaged.

The lever may have a stroke length associated therewith, wherein actuation of the lever by a single stroke length in a tensioning direction actuates the tensioner from a home position of the tensioner to a tensioning position of the tensioner. The retainer may be engaged in dependence on the lever reaching a full stroke position corresponding to the tensioning position of the tensioner. The retainer may prevent the lever from returning from the full stroke position to a rest position corresponding to the home position of the tensioner.

An advantage of the single stroke-length and the retainer is that the user is not able to over-tension or otherwise misuse the winding assembly. This is because the retainer provides clear feedback that a single-stroke is all that is needed to tension the tensioning line.

The retainer comprises the catch to automatically (i.e., without user intervention) engage and hold the lever. The retainer may comprise a spring-loaded catch. The retainer may comprise a spiral cam. The spiral cam may be formed on the fulcrum body of the lever. The spiral cam may comprise a drop with which the catch can engage. The catch may be spring-loaded (biased by a spring) to automatically bias the catch into the drop. The drop and the catch may be aligned with the full stroke position of the lever, so that the catch engages with the drop. The spiral cam may be a single-drop spiral cam, consisting of only the one drop into which the catch can engage.

An advantage of the spring-loaded catch combined with the single-drop spiral cam is further feedback that the user has done what needs to be done to tension the tensioning line, without requiring any judgment from the user of whether they have turned the lever enough, and without requiring the user to remember to manually engage the retainer.

The winding assembly may comprise a releaser. The releaser may provide an input in the form of a release button. The releaser may be push-to-release. The releaser may be exterior-facing and deflectable by a user's digit pushing the releaser, to deflect the catch (e.g., spring-loaded catch) out of engagement with the lever. The releaser and the catch, and optionally the spring, may be a common part, for example they may be an integrally formed part.

Motion of the releaser may be controlled by a multi-link mechanism. The multi-link mechanism may be a four-link mechanism, to linearise a motion of the release button to keep the release button facing a given direction between non-depressed and depressed positions of the release button. The multi-link mechanism may be movable in a horizontal plane.

The releaser may be an exterior part of the winding assembly. The releaser and the elongate handle may both be exterior (externally visible, exterior-facing) parts of the winding assembly.

An advantage of the exposed releaser is intuitiveness, because the user can immediately see what needs to be done to release the lever. This reduces the likelihood of misuse by users attempting to free the lever in a different way than intended.

Alternatively, instead of a retainer comprising a spiral cam, the retainer may be a handle retainer configured to engage with the elongate handle of the lever following actuation of the lever in the first, tensioning direction, to prevent movement of the elongate handle of the lever in the second, opposite direction.

An advantage of the handle retainer is that operation of the winding assembly is intuitive. This is because engagement of the elongate handle in the handle retainer provides clear feedback that the tensioning line has been tensioned.

The handle retainer may comprise the catch to automatically (i.e., without user intervention) engage and hold the elongate handle of the lever when the elongate handle of the lever is actuated into the catch. For example, the handle retainer may comprise a snap fit catch.

An advantage of the catch-type handle retainer is further feedback that the user has done what needs to be done to tension the tensioning line, without the user needing to remember to manually engage the handle retainer. It would be understood that a manual latch could be used instead.

The handle retainer may be an exterior part of the winding assembly. The handle retainer and the elongate handle may both be exterior (externally visible, exterior-facing) parts of the winding assembly. The engagement between the handle retainer and the portion of the elongate handle may be externally visible.

An advantage of the exposed, exterior handle retainer is intuitiveness, because the user can immediately see what needs to be done to tension the tensioning line. This would not be the case if a hidden mechanism is used.

The handle retainer may comprise a detent. The detent may be an over-centre detent. The elongate handle may be shaped to deflect the handle retainer until a portion of the elongate handle settles into the detent. The detent may function as the catch described above.

An advantage of the detent of the handle retainer is that the elongate handle is held stably, with good resistance against unintentional disengagement of the elongate handle from the handle retainer. Further, over-centre operation provides toggle-like feedback at the moment of engagement, confirming that the elongate handle is held in place.

The handle retainer may comprise an integral handle releaser. The above-described catch may provide the dual function of the handle retainer and the handle releaser. The catch may be push-to-engage and push-to-release, in the same direction. For example, the catch may be exterior-facing and deflectable by a user's digit pushing the catch, to deflect the catch out of engagement with the elongate handle. In other examples, an input for the handle releaser may be separate from the catch.

An advantage of the integral handle releaser is intuitiveness, because the user can immediately see what needs to be done to release the elongate handle. This reduces the likelihood of misuse by users attempting to free the elongate handle in a different way than intended.

The handle retainer may be aligned with a distal end portion of the elongate handle, distal from the fulcrum body of the handle. The term 'distal end portion' refers to alignment with the end or to the final third, quarter or fifth of the length of the elongate handle (length not including the radius of the fulcrum body).

An advantage is that the handle retainer has a favourable mechanical advantage so does not need to be particularly stiff or bulky.

The drive linkage of the winding assembly may comprise a driver actuatable by the lever, and the tensioner may comprise a drive input directly or indirectly coupled to the driver and actuated by the driver.

The driver and/or the tensioner drive input may be a non-slip drive comprising a mesh drive or a cable actuator.

A mesh drive can comprise a sprocket or a gear. The sprocket(s) may connect to a perforated or indented drive loop such as a ribbed belt or chain. The ribbed belt may comprise transverse ribs. Alternatively, the driver and/or the tensioner drive input comprises a gear, for example, the driver gear may mesh directly with the tensioner drive input gear.

A cable actuator can comprise a wire or wire rope.

An advantage of the use of a non-slip drive linkage is more precise control of the tensioner, compared to ratchets or pulleys. This means that when the lever is actuated until the retainer is engaged, the total mechanical work done by the lever is consistent and predictable, resulting in a predictable amount of tension so that the tensioning line is neither too tight nor too loose. The user no longer has to judge the correct amount of tension.

The lever may be rotatable about a lever axis of rotation extending through the fulcrum body. The lever axis may be an upwards axis such as a vertical axis. Therefore, the lever may rotate laterally.

The tensioner may be rotatable about a tensioner axis of rotation different from the lever axis of rotation. The tensioner axis may be a lateral axis. The tensioner axis may be perpendicular to the lever axis. The drive linkage of the winding assembly may connect the lever axis of rotation to the tensioner axis of rotation. For example, if a drive loop (e.g., belt) is used, the drive loop may be twisted. For example, the drive loop may comprise a quarter-twist. If a gear drive linkage is used instead, the driver may be a bevel gear or worm drive to change the direction of rotation.

An advantage of the direction change is that the winding assembly has a low vertical height, because the lever rotates laterally. Therefore, the winding assembly is suitable for use as a pallet lid winding assembly.

The tensioner may be configured to receive the tensioning line therethrough. The tensioner may be rotatable by the lever via the drive linkage. The rotation of the tensioner may wind the tensioning line around the tensioner. In an example, the tensioner may be slotted, to receive the tensioning line therethrough. The tensioner may be a slotted spindle. The tensioning line may comprise a strap. The return spring as described above may be wound around the slotted spindle.

The winding assembly may comprise a drum axle configured to receive a drum from which the tensioning line can be unwound and to which the tensioning line can be wound. The drum axle may comprise an urger, such as a spiral spring, to bias a drum fitted to the drum axle in a winding direction. The urger may therefore bias the tensioning line in the winding direction. If the tensioning line is wound around the tensioner, this may have the effect of pulling the tensioner in a rotation direction towards the home position of the tensioner. The urger may or may not exert a strong enough pull to rotate the tensioner to the home position of the tensioner. Therefore, a return spring as described above may be provided to ensure a consistent return of the tensioner to its home position.

In an embodiment the retainer is in the form of a handle retainer or downstream retainer, configured to engage following actuation of the lever in a first, tensioning direction, to prevent movement of the lever in a second, opposite direction, wherein if the retainer is a handle retainer the engagement is with the elongate handle of the lever, and wherein if the retainer is a downstream retainer the engagement is downstream of the elongate handle of the lever.

If the retainer is a downstream retainer, the engagement may be with the fulcrum body, the drive linkage, or the tensioner. In an implementation, the engagement is with the fulcrum body as described in the earlier statements.

According to a further aspect of the invention there is provided a pallet lid according to appended claim 14.

### BRIEF DESCRIPTION OF THE DRAWINGS

For a better understanding of various examples of embodiments of the present invention reference will now be made by way of example only to the accompanying drawings in which:
FIG. 1 is a perspective view of a lid in use on a load;
FIG. 2 is a perspective view of a winding assembly for use in the lid shown in FIG. 1, before a strap is tensioned;
FIG. 3 is a perspective view of the winding assembly of FIG. 2, after tensioning the strap;
FIG. 4A is a detail view of a handle retainer engaging an elongate handle of a lever and FIG. 4B is a detail view of the handle retainer releasing the elongate handle;
FIG. 5A is a detail view of a bevel gear drive linkage and FIG. 5B is a detail view of a worm gear drive linkage;
FIG. 6 is a perspective view of an alternative winding assembly for use in the lid shown in FIG. 1, before a strap is tensioned;
FIG. 7 is a perspective view of the winding assembly of FIG. 6, after tensioning the strap;
FIG. 8 illustrates an alternative winding assembly; and
FIG. 9 illustrates an alternative cable actuator.

### DETAILED DESCRIPTION OF VARIOUS EMBODIMENTS OF THE INVENTION

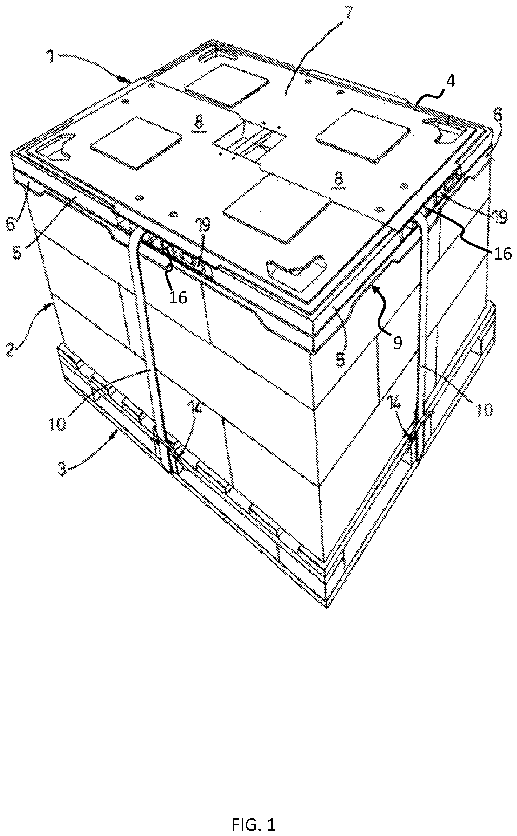

FIG. 1 shows a lid 1 for securing a load 2 on a pallet 3. The lid 1 comprises a body 4 with upstanding sides 5 and depending skirt 6 for capping the top sides of the load 2 (and also enabling a plurality of the lids 1 to be nested with each other or with pallets).

The body 4 comprises an upper portion 7 shown formed by a plurality of plastics mouldings 8, but which could be formed as a single moulding. The body 4 further includes a lower portion 9 formed by a main plastics moulding.

The lid 1 includes four tensioning lines in the form of straps 10. Each tensioning line 10 is movable between a retracted condition within the upper portion 7, and an extended condition in which the tensioning line 10 extends from the upper portion 7. Each tensioning line 10 is provided at a respective side of the lid 1.

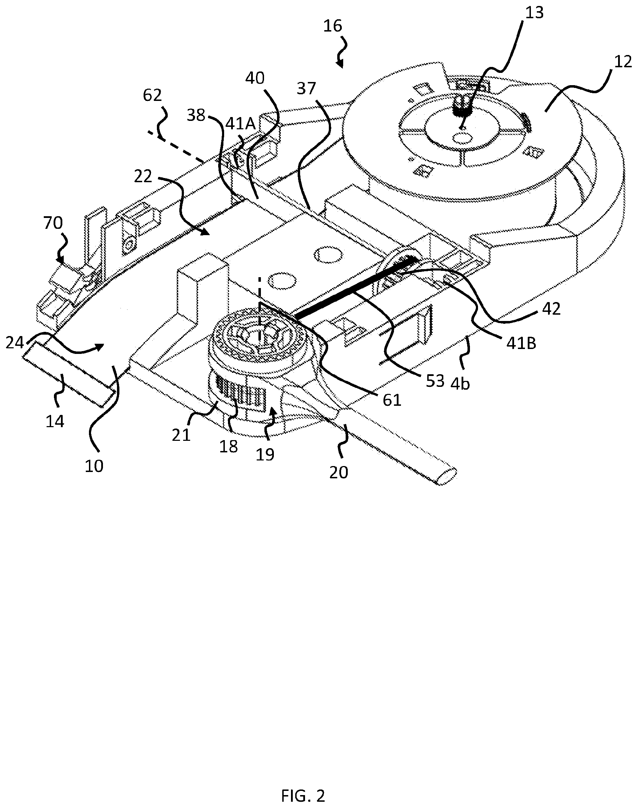

Each tensioning line 10 has a distal end to which an anchor 14 is attached. An anchor 14 can comprise a hook, loop or any other suitable attacher. In the extended condition of the tensioning lines 10, the anchors 14 can be secured to the pallet 3. As shown in FIGS 2-3, each tensioning line 10 also has a proximal end attached to a drum 12.

When the anchors 14 are secured to the pallet 3, as shown in FIG. 1, the tensioning lines 10 can then be tensioned by the use of respective winding assemblies 16 operable on each tensioning line 10. Each winding assembly 16 is provided within the body 4.

Only two of the tensioning lines 10 are visible in FIG. 1, extending from two of the sides of the body 4. The skilled person will realise that the other two tensioning lines 10 extend from the other two sides. Each tensioning line 10 may have its own winding assembly 16.

FIGS. 2-3 illustrate an example winding assembly 16. The winding assembly 16 may comprise a housing 4b in the form of a plastic moulding securable to a winding assembly aperture in an upstanding side 5 of the body 4 of the lid 1. Alternatively, the winding assembly 16 may be integrally moulded with the body 4 of the lid 1, such that the body 4 of the lid forms the housing.

The winding assembly 16 comprises a drum axle 13 configured to receive the drum 12 from which the tensioning line 10 can be unwound when in use, and to which the tensioning line 10 can be re-wound when not in use.

The drum axle 13 may comprise an urger (hidden from view), such as a spring connected at one end to the drum axle 13 and at the other end to the drum 12. The urger rotatably biases the drum 12 in a winding direction to wind the tensioning line 10 on the drum 12, to move the tensioning line 10 to its retracted condition. For example, the urger may comprise a spiral spring.

The tensioning line 10 extends away from the drum 12 along a tensioning line channel 22 and through a tensioning line opening 24 in the lateral exterior of the winding assembly 16. The tensioning line channel 22 interconnects a drum cavity/the drum 12 with the tensioning line opening 24. The anchor 14 of the tensioning line 10 may be oversized relative to the tensioning line opening 24 so that the distal end of the tensioning line 10 can be easily retrieved and is not 'swallowed' by the winding assembly 16.

Each winding assembly 16 comprises a tensioner 37 in the form of a slotted spindle 40. The tensioner 37 is actuated to pull the tensioning line 10 once the anchor 14 of the tensioning line 10 has been secured to the pallet 3.

The tensioner 37 is rotatably mounted in the winding assembly 16. The tensioner 37 spans across the tensioning line channel 22 and engages with the tensioning line 10. The illustrated tensioner 37 is rotatable about a lateral, tensioner axis of rotation 62 perpendicular to the vertical axis of rotation of the drum 12. This ensures that the winding assembly 16 is low-height.

The tensioner 37 is rotatable by operation of a drive linkage actuated by an operating member in the form of a lever 19. The illustrated lever 19 comprises a fulcrum body 21 and an elongate handle 20 extending from the fulcrum body 21, which a user can turn.

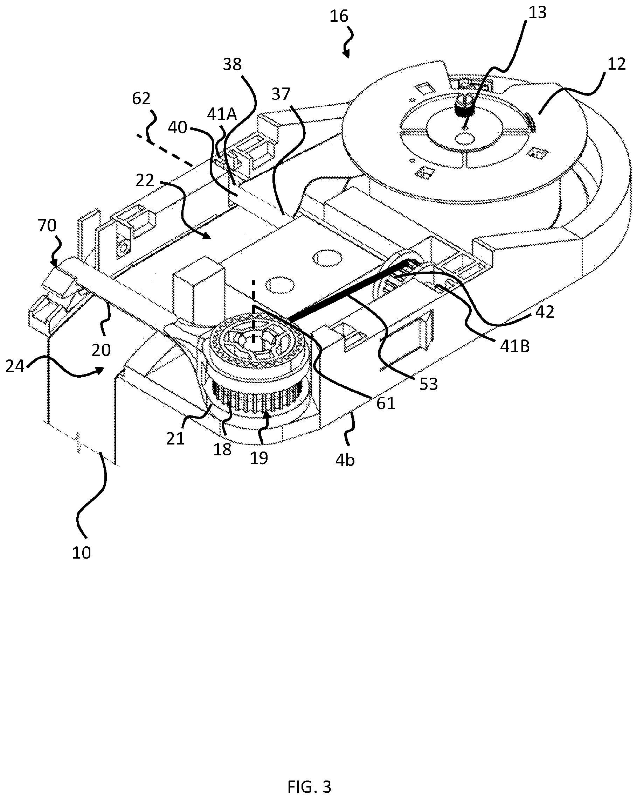

The lever 19 is operated by being pivotally moved about a lever axis of rotation 61 from a rest position (FIG. 2) to the end of its stroke length (FIG. 3). The lever axis of rotation 61 may be an upwards axis such as a vertical axis. Therefore, the lever 19 may move laterally. This ensures that the winding assembly 16 is low-height.

The illustrated tensioner 37 has a slotted spindle 40 defining a slot 38 through which the tensioning line 10 passes. The tensioner 37 is rotatably held in the winding assembly 16 by bearings 41A, 41B. By rotating the slotted spindle 40 after the tensioning line 10 has been anchored to the pallet 3, the tensioning line 10 is wound around the slotted spindle 40 which pulls any slack in the tensioning line 10 to tension the tensioning line 10.

The movement of the lever 19 from the rest position of the lever 19 to the end of the stroke length of the lever 19 rotates the slotted spindle 40 from a home position of the slotted spindle 40 to a tensioning position of the slotted spindle 40. This wraps the tensioning line 10 around the slotted spindle 40 to tension the anchored tensioning line 10. Only one stroke of the lever 19 is necessary.

When the slotted spindle 40 is at the home position, its slot 38 may be aligned with the direction in which the tensioning line 10 can be wound and unwound, to not resist pulling of the tensioning line 10 therethrough. The slot 38 may be parallel to the tensioning line channel 22. The slot 38 may face the tensioning line opening 24.

When the slotted spindle 40 is at the tensioning position, as shown in FIG. 3, the tensioning line 10 is sufficiently wound around the slotted spindle 40 to tension the tensioning line 10 and frictionally react against further unwinding of the tensioning line 10.

The angular distance from the home position of the slotted spindle 40 to the tensioning position of the slotted spindle 40 may be a reflex angle. The lever 19 may have a stroke length of approximately 180 degrees (or a different, obtuse angle). Only one stroke of the lever 19 (e.g., 180 degrees) is necessary to rotate the slotted spindle 40 by the reflex angle (e.g., 300 degrees). The drive linkage has the necessary diameter ratio/gear ratio to effect this single-stroke operation.

It would be appreciated that a tensioner 37 could be implemented in another manner than via a slotted spindle. For example, the slotted spindle could be replaced by an over-centre cam (not shown) at the same location, rotatable to compress the webbing of a strap 10 against a reaction surface, such as a base of the tensioning line channel 22. As the nose of the cam approaches perpendicular to the reaction surface, the normal compressive force of the tensioning line 10 increases to create sufficient traction to drag the tensioning line 10 back in a tensioning direction. Once the nose of the cam has passed over-centre (nose passes perpendicular), the tensioning line 10 is tensioned. Further it is difficult to unwind the tensioning line 10 by pulling on the tensioning line 10 because pulling hard increases the friction.

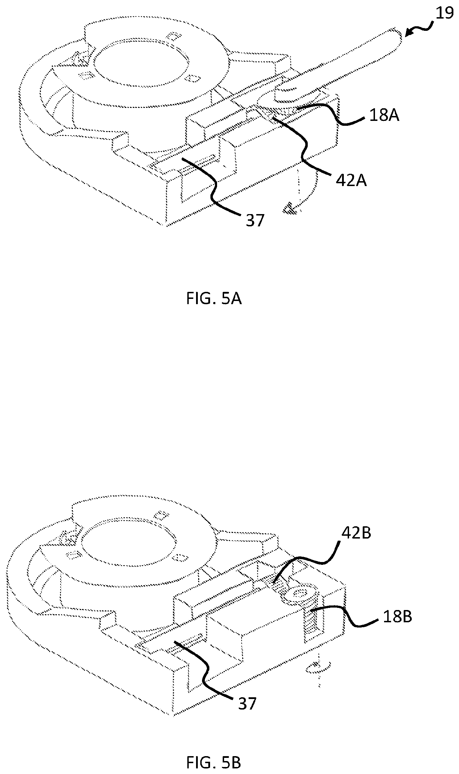

In FIGS. 2-3, a non-slip drive linkage couples the lever 19 to the tensioner 37. The non-slip drive linkage has a driver 18 actuatable by the lever 19, and a tensioner drive input 42 connected to the tensioner 37. The driver 18 and tensioner drive input 42 may connect directly as shown in FIGS. 5A-5B, or indirectly via a transmission line 53 shown in FIGS. 2-4B.

If the non-slip drive linkage is a mesh drive linkage, the driver 18 may be a sprocket actuatable by the lever 19; the tensioner drive input 42 may be a sprocket; and the transmission line 53 may be a transverse-ribbed belt or chain that meshes with the sprockets 18, 42.

If the non-slip drive linkage is instead a cable actuator, the transmission line 53 would be a wire or wire rope, connected at one end to a radial part of the driver 18 and at the other end to a radial part of the tensioner drive input 42.

The driver 18 may be an integral part of the fulcrum body 21 of the lever 19. For example, the lever 19 may be comprised of an elongate handle 20 connected to a driver 18, defining a Class 2 lever. The mechanical advantage of the lever 19 is the radius of the distal end of the elongate handle 20 from the lever axis of rotation 61, divided by the shorter radius of the driver 18 from the lever axis of rotation 61.

The tensioner drive input 42 is coaxial with and connected to the slotted spindle 40. The tensioner drive input 42 may be integrally moulded with, or secured to, the slotted spindle 40.

The tensioner axis of rotation 62 of the tensioner drive input 42 is perpendicular to the lever axis of rotation 61 about which the driver 18 rotates. Therefore, the drive loop 53 can comprise a quarter-twist to connect the axes.

FIGS. 5A-5B illustrate example alternative implementations of a drive linkage connecting different axes. Instead of a sprocket and a loop, the driver is a gear and the tensioner drive input is a gear. The driver gear meshes directly or indirectly with the tensioner drive input gear. In FIG. 5A, the driver gear is a bevel gear 18A and the tensioner drive input gear is a bevel gear 42A. In FIG. 5B, the driver gear is a worm drive 18B and the tensioner drive input gear is a worm wheel 42B. Note that the elongate handle 20 is not shown in FIG. 5B, but if provided could connect to an end of the worm drive 18B.

In some implementations, the elongate handle 20 can be removed and a tool such as a hex key can be inserted into the driver, for example to enable tool-assisted or automated tensioning.

Returning to FIGS. 2-3, the winding assembly 16 is provided with a handle retainer 70 configured to engage with the elongate handle 20 of the lever 19 following actuation of the lever 19 in a first, tensioning direction (from the rest position of the lever 19 to the end of the stroke length of the lever 19), to prevent movement of the elongate handle 20 of the lever 19 in a second, opposite direction despite the bias force from the urger of the drum axle 13 biasing the lever 19 back towards its rest position.

FIG. 2 shows the lever 19 at its rest position wherein the tensioner 37 is at its home position. FIG. 3 shows the lever 19 at its full stroke position wherein the tensioner 37 is at its tensioning position. In FIG. 3, the elongate handle 20 of the lever 19 is engaged with the handle retainer 70.

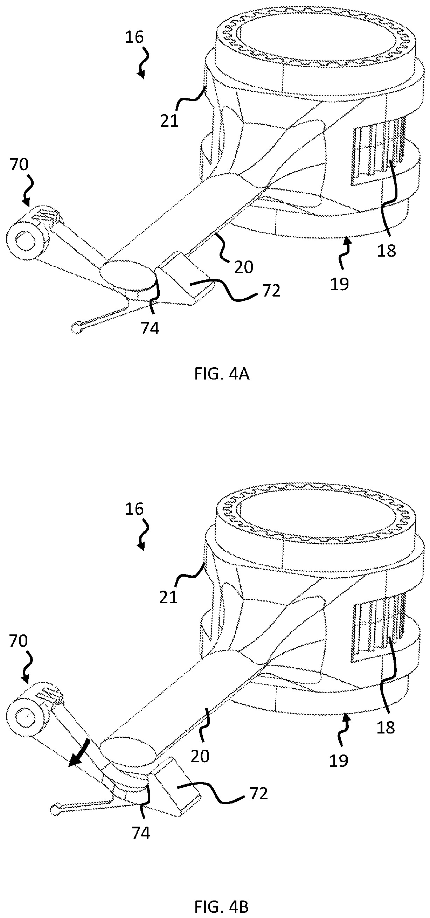

FIGS. 4A-4B show the handle retainer 70 in more detail. The handle retainer 70 comprises a catch 72 configured to automatically (i.e., without user intervention) engage and hold the elongate handle 20 of the lever 19 when the elongate handle 20 of the lever 19 is moved into the catch 72 (the full stroke position of the lever 19).

The catch 72 operates in the manner of a one-way gate that the lever 19 can enter but cannot leave without first undoing the catch 72. The catch 72 is implemented as a snap-fit catch 72.

The snap-fit catch 72 is in the path of the elongate handle 20. The elongate handle 20 pushes against the snap-fit catch 72 to deflect the snap-fit catch 72 away from its neutral undeflected position, for example by flexing the snap-fit catch 72. The axis of flex/rotation of the snap-fit catch 72 may be a lateral axis. When the elongate handle 20 passes an over-centre detent 74 of the snap-fit catch 72, the snap-fit catch 72 toggles into engagement with the elongate handle 20. The whole elongate handle 20 may be within the detent 74. The detent 74 is hook-shaped to create the over-centre actuation.

The elongate handle 20 is itself shaped to deflect the snap-fit catch 72 until the portion of the elongate handle 20 settles into the detent 74. As shown, the elongate handle 20 comprises a curved surface to deflect the snap-fit catch 72. Alternatively, the surface could be sloped and ramp-like. Likewise, the snap-fit catch 72 comprises a sloped and/or curved deflection surface for deflection by the elongate handle 20. The shape of the detent 74 of the snap-fit catch 72 may also match a portion of the cross-section shape of the elongate handle 20 (e.g., oval shaped in the FIGs).

As shown in FIGS. 2-3, the handle retainer 70, the elongate handle 20 and the tensioning line opening 24 are exterior parts of the winding assembly 16. They are at an upstanding side 5 of the lid 1 of FIG. 1. Therefore, a user can grab the elongate handle 20, turn the lever 19 and see how the elongate handle 20 is engaged. The engagement of the elongate handle 20 into the handle retainer 70 provides clear feedback that the tensioning line 10 is now sufficiently tensioned.

As shown in FIGS. 2-3, the handle retainer 70 is aligned with a distal end portion of the elongate handle 20, distal from the fulcrum body 21 of the lever 18. The term 'distal end portion' refers to alignment with the end or to the final third, quarter or fifth of the length of the elongate handle 20 (length not including the radius of the fulcrum body 21).

To release the elongate handle 20 from the handle retainer 70, the user pushes (e.g., flexes) the catch 72 vertically with their finger, to separate the detent 74 from the elongate handle 20. The deflection surface of the catch 72 may function as the handle releaser by being sized to receive a user's fingertip.

This disengagement of the handle retainer 70 is sufficient to allow the urger of the drum axle 13 to pull the line 10 hard enough to rotate the tensioner 37 back to its home position, the back-rotation of the tensioner 37 causing rotation of the lever 19 back to its rest position. The tensioning line 10 is now slack which allows the user to separate the anchor 14 from the pallet 3 and retract the tensioning line 10.

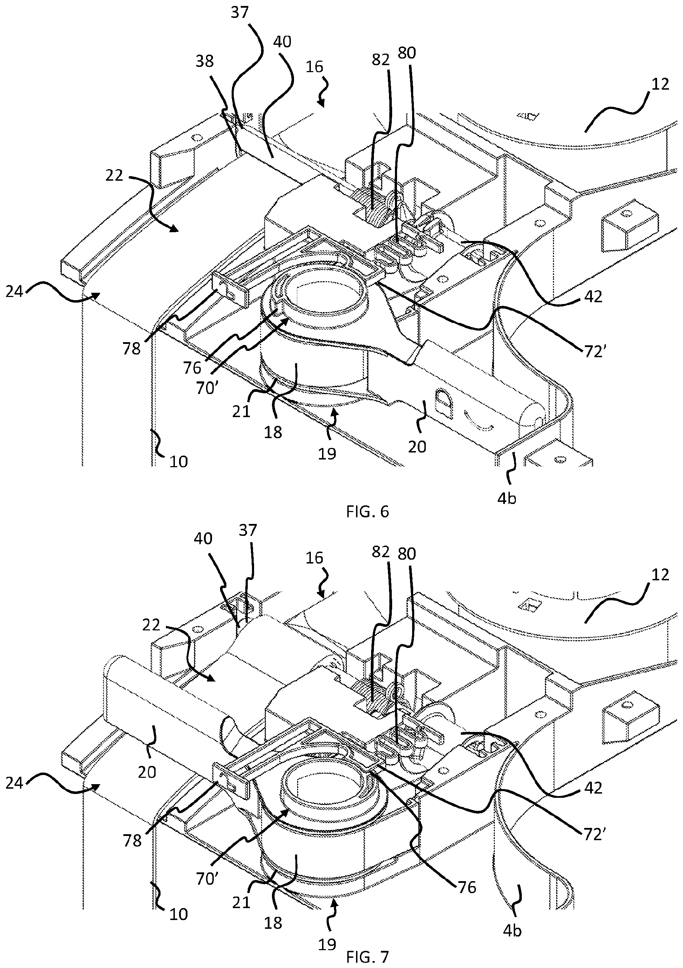

FIGS. 6-7 show an alternative design of retainer 70', compared to the handle retainer 70 of FIGS. 2-4. Relative to the handle retainer 70 of FIGS. 2-4, the retainer 70' engages a downstream part of the drive linkage connecting the handle to the tensioner. This downstream retainer 70' is at least partially hidden/internal rather than being exposed.

The retainer 70' of FIGS. 6-7 comprises a single-drop spiral cam 76 comprised in the fulcrum body 21 of the lever 19, and a spring-loaded catch 72' configured to engage with the spiral cam 76. The axis of the spiral cam 76 may be coaxial with the lever axis of rotation 61. The illustrated spiral cam 76 is above the driver 18, but could alternatively be below the driver 18.

The retainer 70' is configured to engage with the lever 19 following actuation of the lever 19 in the first, tensioning direction (from the rest position of the lever 19 to the end of the stroke length of the lever 19), to prevent movement of the lever 19 in the second, opposite direction despite the bias force from the urger of the drum axle 13 biasing the lever 19 back towards its rest position.

FIG. 6 shows the lever 19 at its rest position wherein the tensioner 37 is at its home position. As the lever 19 is rotated to the full stroke position shown in FIG. 7, the rotating spiral cam 76 deflects the catch 72', acting against the spring 80 of the catch 72'. FIG. 7 shows the lever 19 at its full stroke position wherein the tensioner 37 is at its tensioning position. In FIG. 7, the retainer 70' is in an engaged state. Specifically, the catch 72' has fallen into the drop of the spiral cam 76. Therefore, when the user releases the handle 20, the lever 19 remains stationary because the spiral cam 76 is unable to back-rotate due to the engagement between the catch 72' and the drop of the spiral cam 76.

The catch 72' operates in the manner of a one-way gate that the spiral cam 76 can enter but cannot leave without first undoing the catch 72'. The catch 72' is implemented as a spring-loaded catch 72'.

As shown in FIGS. 6-7, the elongate handle 20 and the tensioning line opening 24 are exterior parts of the winding assembly 16. They are at an upstanding side 5 of the lid 1 of FIG. 1. Therefore, a user can grab the elongate handle 20, turn the lever 19 and feel the elongate handle 20 being engaged by the retainer 70'. The engagement of the retainer 70' provides clear haptic feedback that the tensioning line 10 is now sufficiently tensioned.

To release the elongate handle 20 from the retainer 70', the user pushes a releaser in the form of a release button 78 with their finger, to separate the catch 72' from the drop of the spiral cam 76. The release button 78 is sized to receive a user's fingertip.

This disengagement of the retainer 70' by the release button 78 may or may not be sufficient to allow the urger of the drum axle 13 to pull the line 10 hard enough to rotate the tensioner 37 back to its home position. Should the urger of the drum axle 13 not be powerful or consistent enough to cause rotation of the tensioner 37 to its home position, a return spring 82 can be provided. FIGS. 6-7 illustrate an example return spring 82, described below.

One end of the illustrated return spring 82 is connected to the slotted spindle 40 and another end of the return spring 82 is attached to the housing of the winding assembly 16. The return spring 82 is wrapped around the slotted spindle 40. The return spring 82 is configured to bias the tensioner 37 back to its home position upon actuation of the release button 78.

If the handle 20 is connected to the slotted spindle 40 via a non-slip drive linkage, then the return spring 82 is able to simultaneously bias the tensioner 37 back to its home position and the lever 19 to its rest position. Otherwise, a separate return spring may be provided for the lever 19 at the cost of an increased part count.

In other implementations, the return spring 82 could be connected to another part of the tensioner load path connecting the handle 20 to the rotation of the slotted spindle 40.

In some examples, a return spring 82 of the type described in relation to FIGS. 6 and 7 could be employed in the winding assembly 16 of FIGS. 2 to 4B.

The tensioning line 10 is now slack which allows the user to separate the anchor 14 from the pallet 3 and retract the tensioning line 10.

The release button 78, the catch 72', and optionally the spring 80, may be an integral part such as an integrally-moulded part. This obviates the need for a mechanism connecting the release button 78 to the catch 72', or multiple parts during manufacture.

For intuitive use, the release button 78 is an exterior part of the winding assembly. The release button 78 is adjacent the lever 19. The release button 78 is exposed at the upstanding side 5 of the lid 1 of FIG. 1. The spring 80 may be internal and anchored against a part of the lid 1 of FIG. 1.

Since the part comprising the release button 78 is a high-wear item, it can be mounted above the driver 18 for ease of replacement. When a top cap (not shown) of the housing 4b is removed, the part is located at the top of the winding assembly 16 and can therefore be picked out for replacement. This minimises the down-time of a damaged winding assembly 16, and promotes repair rather than replacement.

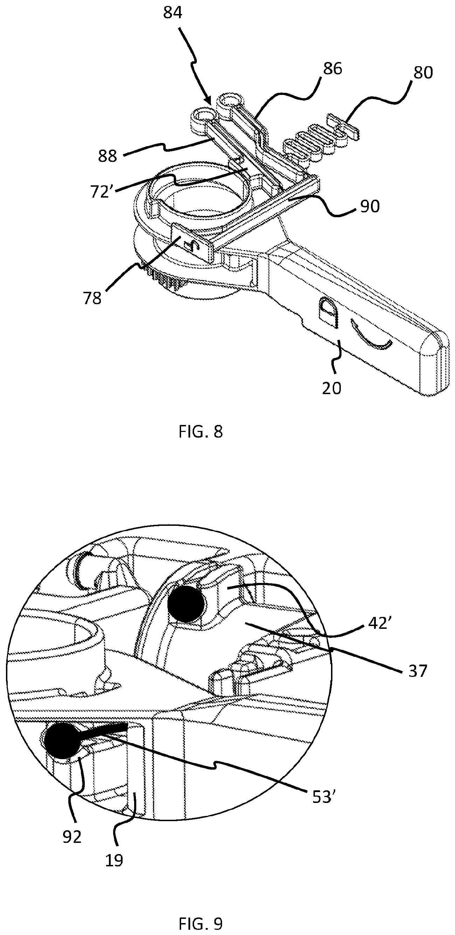

FIG. 8 illustrates a variant of the part comprising the release button 78, wherein motion of the release button 78 is controlled by a multi-link mechanism 84.

In the illustrated example, the multi-link mechanism 84 is in the form of a parallel four-link mechanism 84, to linearise a motion of the release button 78 and keep the release button 78 facing a given direction between non-depressed and depressed positions of the release button 78.

The multi-link mechanism 84 comprises a crank 86, a rocker 88, and a connecting rod 90 supported by the crank 86 and rocker 88, wherein the release button 78 is supported by the connecting rod 90.

The crank 86 and rocker 88 may be pivotally connected to the housing 4b (not shown), for example to the top cap. Where the multi-link mechanism 84 is a four-link mechanism, the housing 4b would represent the fourth link in a free body diagram.

A first end of the crank 86 is pivotally supported by the housing 4b. A second end of the crank 86 pivotally supports the connecting rod 90. The connecting rod 90 may be pivotally supported by the crank 86 by a flexure bearing such as a living hinge.

The spring 80 may be connected to any appropriate location on the multi-link mechanism 84 to urge the release button 78 to its non-depressed position. For example, the spring 80 is shown as being connected to the crank 86.

A first end of the rocker 88 is pivotally supported by the housing 4b. A second end of the rocker 88 pivotally supports the connecting rod 90. The connecting rod 90 may be pivotally supported by the rocker 88 by a flexure bearing such as a living hinge.

The catch 72' may be located anywhere on the multi-link mechanism 84 that is aligned with the spiral cam 76 and which enables the spring 80 to urge the catch 72' towards the spiral cam 76. For example, the catch 72' is shown as being formed along the rocker 88.

A first end of the connecting rod 90 may be connected to the crank 86. A second end of the connecting rod 90 may support the release button 78. The rocker 88 may be connected between the first and second ends of the connecting rod 90. The second end of the connecting rod 90 may be cantilevered beyond the rocker 88.

The multi-link mechanism 84 may be movable in a horizontal plane. Therefore, additional height is not required to accommodate the multi-link mechanism 84.

As the handle 20 is turned from the rest position to its full stroke position, the spiral cam 76 slides against the catch 72' to rotate the multi-link mechanism 84 in a first direction resisted by the spring 80. When the full stroke position is reached, the spring 80 is able to actuate the multi-link mechanism in a second, opposite direction to engage the catch 72' with the drop of the spiral cam 76.

When the release button 78 is depressed by a user's digit while the handle 20 is at the full stroke position, the connecting rod 90 rotates the rocker 88 and the crank 86 in the first direction resisted by the spring 80. With sufficient depression of the release button 78, the catch 72' is lifted out of the spiral cam 76, enabling the handle 20 to spring back to its rest position.

When the user's digit is then removed from the release button 78, the spring 80 rotates the crank 86 in the second direction to actuate the multi-link mechanism 84 to return the release button 78 to its non-depressed position, and urge the catch 72' against the spiral cam 76.

The multi-link mechanism 84 may be an integrally-formed part. The multi-link mechanism 84 may be integrally formed with the release button 76, catch 72', and spring 80.

FIG. 9 illustrates a further example cable actuator providing a non-slip drive. As shown in the detail view of FIG. 9, the transmission line 53' is in the form of a cable. The cable is connected at one end to a first seat 92 mounted to the lever 19, and connected at its opposite end to a tensioner drive input 42' of the tensioner 37, the input 42' being in the form of a second seat. The seats 42', 92 and cable 53' define a winding mechanism. It would be appreciated that a different form of connection could be provided, in other examples.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A winding assembly (16) comprising:
a tensioner (37) to engage a tensioning line (10);
a lever (19) comprising a fulcrum body (21) and an elongate handle (20) extending from the fulcrum body;
a drive linkage coupling actuation of the lever to motion of the tensioner;
a return spring (82) to bias the lever towards a rest position of the lever; and
a retainer (70, 70') configured to be engaged following actuation of the lever in a first, tensioning direction, to prevent movement of the lever in a second, opposite direction, wherein the retainer comprises a catch (72, 72') to automatically engage and hold the lever.

2. The winding assembly of claim 1, wherein the retainer is in the form of a handle retainer (70) or downstream retainer (70'), configured to engage following actuation of the lever in the first, tensioning direction, to prevent movement of the lever in the second, opposite direction, wherein if the retainer is a handle retainer the engagement is with the elongate handle of the lever, and wherein if the retainer is a downstream retainer the engagement is downstream of the elongate handle of the lever.

3. The winding assembly of claim 1 or 2, wherein the lever has a stroke length associated therewith, wherein actuation of the lever by a single stroke length in the first, tensioning direction actuates the tensioner from a home position of the tensioner to a tensioning position of the tensioner.

4. The winding assembly of claim 3, wherein the retainer is engaged in dependence on the lever reaching a full stroke position corresponding to the tensioning position of the tensioner.

5. The winding assembly of claim 2, 3, or 4, wherein an angular distance from the home position of the tensioner to the tensioning position of the tensioner is a reflex angle, and wherein the lever has a stroke length of approximately 180 degrees or an obtuse angle.

6. The winding assembly of any preceding claim, wherein the winding assembly comprises the return spring (82) in a tensioner load path between the lever and the tensioner.

7. The winding assembly of claim 6, wherein a bias force of the return spring reaches the lever via the drive linkage.

8. The winding assembly of any preceding claim, wherein the retainer comprises a spring-loaded catch (72') and a spiral cam (76), optionally wherein the spiral cam is a single-drop spiral cam, consisting of only one drop into which the spring-loaded catch can engage.

9. The winding assembly of any preceding claim, comprising a releaser, wherein the releaser (78) is push-to-release.

10. The winding assembly of claim 9, wherein the releaser is exterior-facing and deflectable by a user's digit pushing the releaser, to deflect a catch of the retainer out of engagement.

11. The winding assembly of any preceding claim, wherein the tensioner is configured to receive the tensioning line therethrough, wherein the tensioner is rotatable by the lever via the drive linkage, and wherein rotation of the tensioner winds the tensioning line around the tensioner.

12. The winding assembly of claim 11, wherein the tensioner comprises a slotted spindle (40).

13. The winding assembly of any preceding claim, comprising a drum axle (13) configured to receive a drum (12) from which the tensioning line can be unwound and to which the tensioning line can be wound, optionally wherein the drum axle comprises an urger to bias the drum fitted to the drum axle in a winding direction.

14. A pallet lid (1) comprising the winding assembly as claimed in any of the preceding claims.

15. The pallet lid of claim 14, comprising a body (4) with upstanding sides (5) and a depending skirt (6) for capping top sides of a load (2), wherein the lid comprises a plurality of the tensioning lines and wherein each tensioning line is provided with a separate winding assembly.

## Patentansprüche

1. Wicklungsanordnung (16), umfassend:
einen Spanner (37), um in eine Spannleitung (10) einzugreifen;
einen Hebel (19), der einen Drehpunktkörper (21) und einen länglichen Griff (20) umfasst, der sich von dem Drehpunktkörper erstreckt;
eine Antriebsgestängekopplungsbetätigung des Hebels für Motion des Spanners;
eine Rückstellfeder (82), um den Hebel zu einer Ruheposition des Hebels vorzuspannen;
und
einen Halter (70, 70'), der dazu konfiguriert ist, nach Betätigung des Hebels in einer ersten, Spannrichtung eingegriffen zu werden, um Bewegung des Hebels in einer zweiten, entgegengesetzten Richtung zu verhindern, wobei der Halter eine Sperre (72, 72') umfasst, um automatisch in den Hebel einzugreifen und ihn zu halten.

2. Wicklungsanordnung nach Anspruch 1, wobei der Halter in der Form eines Griffhalters (70) oder eines stromabwärtigen Halters (70') ist, der dazu konfiguriert ist, nach Betätigung des Hebels in der ersten, Spannrichtung einzugreifen, um Bewegung des Hebels in der zweiten, entgegengesetzten Richtung zu verhindern, wobei, wenn der Halter ein Griffhalter ist, der Eingriff mit dem länglichen Griff des Hebels ist, und wobei, wenn der Halter ein stromabwärtiger Halter ist, der Eingriff stromabwärts von dem länglichen Griff des Hebels ist.

3. Wicklungsanordnung nach Anspruch 1 oder 2, wobei dem Hebel eine Hublänge aufweist, die damit assoziiert ist, wobei Betätigung des Hebels um eine einzelne Hublänge in der ersten, Spannrichtung den Spanner von einer Ausgangsposition des Spanners zu einer Spannposition des Spanners betätigt.

4. Wicklungsanordnung nach Anspruch 3, wobei der Halter in Abhängigkeit davon eingegriffen wird, dass der Hebel eine Vollhubposition entsprechend der Spannposition des Spanners erreicht.

5. Wicklungsanordnung nach Anspruch 2, 3 oder 4, wobei ein Winkelabstand von der Ausgangsposition des Spanners zu der Spannposition des Spanners ein Reflexwinkel ist und wobei der Hebel eine Hublänge von ungefähr 180 Grad oder einen stumpfen Winkel aufweist.

6. Wicklungsanordnung nach einem vorhergehenden Anspruch, wobei die Wicklungsanordnung die Rückstellfeder (82) in einem Spannerlastweg zwischen dem Hebel und dem Spanner umfasst.

7. Wicklungsanordnung nach Anspruch 6, wobei eine Vorspannkraft der Rückstellfeder den Hebel über das Antriebsgestänge erreicht.

8. Wicklungsanordnung nach einem vorhergehenden Anspruch, wobei der Halter eine federbelastete Sperre (72') und einen Spiralnocken (76) umfasst, wobei optional der Spiralnocken ein Einzeltropfen-Spiralnocken ist, der aus nur einem Tropfen besteht, in den der federbelastete Riegel eingreifen kann.

9. Wicklungsanordnung nach einem vorhergehenden Anspruch, umfassend einen Löser, wobei der Löser (78) zum Lösen gedrückt wird.

10. Wicklungsanordnung nach Anspruch 9, wobei der Löser nach außen gerichtet und durch einen Finger des Benutzers, der den Löser drückt, auslenkbar ist, um eine Sperre des Halters aus Eingriff auszulenken.

11. Wicklungsanordnung nach einem vorhergehenden Anspruch, wobei der Spanner dazu konfiguriert ist, die Spannleitung dort hindurch aufzunehmen, wobei der Spanner durch den Hebel über das Antriebsgestänge drehbar ist und wobei Drehung des Spenders die Spannleitung um den Spanner wickelt.

12. Wicklungsanordnung nach Anspruch 11, wobei der Spanner eine geschlitzte Spindel (40) umfasst.

13. Wicklungsanordnung nach einem vorhergehenden Anspruch, umfassend eine Trommelachse (13), die dazu konfiguriert ist, eine Trommel (12) aufzunehmen, von der die Spannleitung abgewickelt werden kann und auf welche die Spannleitung gewickelt werden kann, wobei optional die Trommelachse einen Drücker umfasst, um die Trommel, die an der Trommelachse angebracht ist, in einer Wicklungsrichtung vorzuspannen.

14. Palettendeckel (1), umfassend die Wicklungsanordnung nach einem der vorhergehenden Ansprüche.

15. Palettendeckel nach Anspruch 14, umfassend einen Körper (4) mit aufrechten Seiten (5) und einer herabhängenden Schürze (6) zum Abdecken von Oberseiten einer Last (2), wobei der Deckel eine Vielzahl der Spannleitungen umfasst und wobei jede Spannleitung mit einer separaten Wicklungsanordnung bereitgestellt ist.

## Revendications

1. Ensemble d'enroulement (16) comprenant :
un tendeur (37) destiné à se mettre en prise avec une ligne de mise en tension (10) ;
un levier (19) comprenant un corps de pivot (21) et une poignée allongée (20) s'étendant à partir du corps de pivot ;
une liaison d'entraînement accouplant l'actionnement du levier au mouvement du tendeur ;
un ressort de rappel (82) destiné à solliciter le levier en direction d'une position de repos du levier ; et
un dispositif de retenue (70, 70') conçu pour être mis en prise suite à l'actionnement du levier dans une première direction de mise en tension, de façon à empêcher le mouvement du levier dans une seconde direction opposée, ledit dispositif de retenue comprenant un cliquet (72, 72') destiné à la mise en prise et au maintien automatiques du levier.

2. Ensemble d'enroulement selon la revendication 1, ledit dispositif de retenue se présentant sous la forme d'un dispositif de retenue de poignée (70) ou d'un dispositif de retenue en aval (70'), étant conçu pour se mettre en prise suite à l'actionnement du levier dans la première direction de mise en tension, de manière à empêcher le mouvement du levier dans la seconde direction opposée ; si le dispositif de retenue est un dispositif de retenue de poignée, ladite mise en prise se faisant avec la poignée allongée du levier, et si le dispositif de retenue est un dispositif de retenue en aval, ladite mise en prise se faisant en aval de la poignée allongée du levier.

3. Ensemble d'enroulement selon la revendication 1 ou 2, ledit levier présentant une longueur de course qui lui est associée, ledit actionnement du levier d'une seule longueur de course dans la première direction de mise en tension actionnant le tendeur d'une position de départ du tendeur à une position de mise en tension du tendeur.

4. Ensemble d'enroulement selon la revendication 3, ledit dispositif de retenue étant mis en prise en fonction du fait que le levier atteint une position de course complète correspondant à la position de mise en tension du tendeur.

5. Ensemble d'enroulement selon la revendication 2, 3 ou 4, la distance angulaire de la position de départ du tendeur à la position de mise en tension du tendeur étant un angle réflexe, et ledit levier présentant une longueur de course d'environ 180 degrés ou d'un angle obtus.

6. Ensemble d'enroulement selon l'une quelconque des revendications précédentes, ledit ensemble d'enroulement comprenant le ressort de rappel (82) dans un trajet de charge de tendeur entre le levier et le tendeur.

7. Ensemble d'enroulement selon la revendication 6, la force de sollicitation du ressort de rappel atteignant le levier par l'intermédiaire de la liaison d'entraînement.

8. Ensemble d'enroulement selon l'une quelconque des revendications précédentes, ledit dispositif de retenue comprenant un cliquet à ressort (72') et une came en spirale (76), éventuellement ladite came en spirale étant une came en spirale à chute unique, constituée d'une chute unique dans laquelle le cliquet à ressort peut se mettre en prise.

9. Ensemble d'enroulement selon l'une quelconque des revendications précédentes, comprenant un dispositif de libération, ledit dispositif de libération (78) étant un dispositif de libération par poussée.

10. Ensemble d'enroulement selon la revendication 9, ledit dispositif de libération étant tourné vers l'extérieur et pouvant être dévié par le doigt d'un utilisateur poussant le dispositif de libération, de manière à dévier un cliquet du dispositif de retenue hors de sa mise en prise.

11. Ensemble d'enroulement selon l'une quelconque des revendications précédentes, ledit tendeur étant conçu pour recevoir la ligne de mise en tension en son travers, ledit tendeur pouvant être mis en rotation par le levier par l'intermédiaire de la liaison d'entraînement, et ladite rotation du tendeur enroulant la ligne de mise en tension autour du tendeur.

12. Ensemble d'enroulement selon la revendication 11, ledit tendeur comprenant une broche fendue (40).

13. Ensemble d'enroulement selon l'une quelconque des revendications précédentes, comprenant un axe de tambour (13) conçu pour recevoir un tambour (12) à partir duquel la ligne de mise en tension peut être déroulée et sur lequel la ligne de mise en tension peut être enroulée, éventuellement ledit axe de tambour comprenant un dispositif de poussée destiné à solliciter le tambour monté sur l'axe de tambour dans une direction d'enroulement.

14. Couvercle de palette (1) comprenant l'ensemble d'enroulement selon l'une quelconque des revendications précédentes.

15. Couvercle de palette selon la revendication 14, comprenant un corps (4) doté de côtés verticaux (5) et une jupe dépendante (6) pour coiffer les côtés supérieurs d'une charge (2), ledit couvercle comprenant une pluralité de lignes de mise en tension et chaque ligne de mise en tension étant pourvue d'un ensemble d'enroulement distinct.
